# EUROPEAN PATENT APPLICATION

(11) **EP 4 722 784 A1**
(43) Date of publication of application: **08.04.2026**
(21) Application number: 25205702.1
(22) Date of filing: 30.09.2025
(51) Int. Cl.: G02B 23/18

(54) **BINOCULARS**

(30) Priority: 01.10.2024 JP 2024172804
(71) Applicant: FUJIFILM Corporation, Tokyo 106-8620 (JP)
(72) Inventor: SHIGETA, Tomoaki, Saitama, 331-9624 (JP); SAITO, Taiki, Saitama, 331-9624 (JP)
(74) Representative: Dehns Germany Partnerschaft mbB

(57) **Abstract**

Binoculars includes a body portion that includes a bottom surface and a top surface. A recess portion recessed to a top surface side is formed at the bottom surface, and a first surface shape portion that is formed in a three-dimensional shape at the recess portion is different from a second surface shape portion that is formed in a three-dimensional shape at the top surface.

## Description

### BACKGROUND OF THE INVENTION

### 1. Field of the Invention

The present disclosed technology relates to binoculars.

### 2. Description of the Related Art

Disclosed in JP1998-227984A (JP-H10-227984A) are binoculars in which a distance between optical axes of right and left ocular lens groups is equal to or smaller than a distance between optical axes of right and left objective lens groups and of which a body has a substantially bilaterally symmetrical shape. Grip portions are formed at right and left portions of the body and side portions of the right and left grip portions have shapes that are inclined in directions away from each other such that a distance between the side portions increases from a front portion of the body toward a rear portion of the body.

Disclosed in JP2013-66630A is a grip surface anti-slip structure in which a surface of a base body portion includes mesh-patterned unevenness portions consisting of a large number of convex closed regions defined by groove-shaped linear recess portions, a groove-shaped linear recess pattern, which is the shape of the groove-shaped linear recess portions as seen from above in plan view and which defines the convex closed regions, is formed by a large number of boundary segments each of which extends between two nodes and which define the convex closed regions, and an average value N of the number of line segments extending from one node is 3.0 ≤ N < 4.0 and the areas and the shapes of convex closed regions that are equal to each other in number of line segments L surrounding the convex closed region are not constant.

Disclosed in JP1999-281896A (JP-H11-281896A) is a lens barrel protector for a telescope including lens barrels consisting of objective lens barrel portions in which objective lenses are mounted and ocular lens barrel portions in which ocular lenses are mounted and that are movable in an optical axis direction with respect to the objective lens barrel portions. The lens barrel protector includes a protection wall that is provided at at least a portion of an outer periphery of at least one of the lens barrels to cover the lens barrel with a predetermined gap provided therebetween and a distal end of the protection wall protrudes beyond barrel ends of the lens barrels.

Disclosed in WO2017/145498A are binoculars including two lens barrels, an operation member that is swingably disposed between the two lens barrels, a plurality of finger hooking portions that protrude toward the two lens barrels from the operation member, an urging member that urges the operation member in a state where at least two finger hooking portions are inclined at the same angle with respect to the two lens barrels, a reception member that is pressed to be moved in a case where the operation member rotates in one direction and rotates in the other direction against the urging member urging the operation member as a swinging operation is performed on the finger hooking portions, and a switch body that is opened and closed in a case where the reception member is pressed to be moved.

Disclosed in JP1996-62505A (JP-H8-62505A) are binoculars including a pair of right and left lens barrels each of which holds an objective lens, an image inversion prism, and an ocular lens, a focus detection module, a lens driving motor that drives a predetermined lens in each lens barrel based on the result of detection generated by the focus detection module, and a battery chamber that stores a battery serving as a power source for the lens driving motor. Each of the focus detection module and the lens driving motor is disposed around one lens barrel and the battery chamber is disposed around the other lens barrel.

### SUMMARY OF THE INVENTION

One embodiment of the present disclosed technology provides binoculars with which it is possible to improve the grip performance of a body portion in comparison with the related art.

According to a first aspect of the present disclosed technology, there are provided binoculars including a body portion that includes a bottom surface and a top surface, in which a recess portion recessed to a top surface side is formed at the bottom surface, and a first surface shape portion that is formed in a three-dimensional shape at the recess portion is different from a second surface shape portion that is formed in a three-dimensional shape at the top surface.

According to a second aspect of the present disclosed technology, in the binoculars according to the first aspect, the first surface shape portion may have a pattern shape in which first patterns are repeatedly arranged, and each first pattern may include a first shape portion that extends in a first direction intersecting an optical axis direction, and a second shape portion that extends in a second direction inclined with respect to the optical axis direction and the first direction.

According to a third aspect of the present disclosed technology, in the binoculars according to the second aspect, the first surface shape portion may have a pattern shape in which the first patterns are repeatedly arranged in the first direction and the second direction.

According to a fourth aspect of the present disclosed technology, in the binoculars according to the second aspect or the third aspect, the first shape portion and the second shape portion may be separated from each other.

According to a fifth aspect of the present disclosed technology, in the binoculars according to any one of the second to fourth aspects, each first pattern may include a third shape portion that extends in a third direction inclined with respect to the optical axis direction and the first direction.

According to a sixth aspect of the present disclosed technology, in the binoculars according to the fifth aspect, the first surface shape portion may have a pattern shape in which the first patterns are repeatedly arranged in the first direction, the second direction, and the third direction.

According to a seventh aspect of the present disclosed technology, in the binoculars according to the fifth aspect or the sixth aspect, the first shape portion, the second shape portion, and the third shape portion may be separated from each other.

According to an eighth aspect of the present disclosed technology, in the binoculars according to any one of the fifth to seventh aspects, the first shape portion, the second shape portion, and the third shape portion may form a triangular shape.

According to a ninth aspect of the present disclosed technology, in the binoculars according to any one of the first to eighth aspects, the second surface shape portion may have a pattern shape in which a plurality of projecting portions extending in an optical axis direction are arranged in a fourth direction intersecting the optical axis direction.

According to a tenth aspect of the present disclosed technology, in the binoculars according to any one of the first to ninth aspects, the first surface shape portion may also be formed in a region of the bottom surface that is adjacent to the recess portion.

According to an eleventh aspect of the present disclosed technology, in the binoculars according to the tenth aspect, the region may include a region that is adjacent to the recess portion in a lateral direction of the body portion.

According to a twelfth aspect of the present disclosed technology, in the binoculars according to the tenth aspect or the eleventh aspect, the body portion may include a first lens barrel portion and a second lens barrel portion that are arranged in a lateral direction of the body portion, and the region may include a region of an apex portion of at least one of the first lens barrel portion or the second lens barrel portion, the apex portion being on a bottom surface side.

According to a thirteenth aspect of the present disclosed technology, in the binoculars according to any one of the tenth to twelfth aspects, the region may be a region closer to a recess portion side than a side surface of the body portion is.

According to a fourteenth aspect of the present disclosed technology, in the binoculars according to any one of the first to thirteenth aspects, a wall surface may be formed at a first end portion of the recess portion in an optical axis direction.

According to a fifteenth aspect of the present disclosed technology, in the binoculars according to the fourteenth aspect, the first end portion may be an object-side end portion of the recess portion.

According to a sixteenth aspect of the present disclosed technology, in the binoculars according to the fourteenth aspect or the fifteenth aspect, the wall surface may be positioned between a central portion of the body portion in the optical axis direction and an object-side end portion of the body portion.

According to a seventeenth aspect of the present disclosed technology, in the binoculars according to any one of the fourteenth to sixteenth aspects, a second end portion of the recess portion in the optical axis direction may be open in the optical axis direction.

According to an eighteenth aspect of the present disclosed technology, in the binoculars according to any one of the first to seventeenth aspects, the body portion may include a first lens barrel portion and a second lens barrel portion that are arranged in a lateral direction of the body portion, and a connecting portion that connects the first lens barrel portion and the second lens barrel portion to each other, and the recess portion may include a first side surface of the bottom surface that is formed at the first lens barrel portion, a second side surface of the bottom surface that is formed at the second lens barrel portion, and a connecting surface of the bottom surface that is formed at the connecting portion.

According to a nineteenth aspect of the present disclosed technology, in the binoculars according to the eighteenth aspect, the first side surface and the second side surface may be curved surfaces, and the connecting surface may be a flat surface.

According to a twentieth aspect of the present disclosed technology, in the binoculars according to any one of the first to nineteenth aspects, the body portion may include an optical system including a vibration-proof mechanism, and a drive power source that drives the vibration-proof mechanism, and the drive power source may be disposed on a side surface side of the body portion with respect to the optical system.

According to a twenty-first aspect of the present disclosed technology, in the binoculars according to the twentieth aspect, the drive power source may be disposed on the side surface side with respect to the recess portion.

According to a twenty-second aspect of the present disclosed technology, in the binoculars according to any one of the first to twenty-first aspects, the first surface shape portion may have a shape that generates a grip force in a case where a gripping force is applied in an optical axis direction, and the second surface shape portion may have a shape that generates a grip force in a case where a gripping force is applied in a direction intersecting the optical axis direction.

### BRIEF DESCRIPTION OF THE DRAWINGS

FIG. 1 is a perspective view of binoculars according to an embodiment of the present disclosed technology.
FIG. 2 is a front view of the binoculars.
FIG. 3 is a rear view of the binoculars.
FIG. 4 is a left side view of the binoculars.
FIG. 5 is a right side view of the binoculars.
FIG. 6 is a top view of the binoculars.
FIG. 7 is a front view of the binoculars of which a housing is partially cut out.
FIG. 8 is a bottom view of the binoculars.
FIG. 9 is an enlarged longitudinal sectional view of the vicinity of a recess portion of the binoculars.
FIG. 10 is a perspective view of the binoculars.
FIG. 11 is an enlarged view of a first surface shape portion.

### DESCRIPTION OF THE PREFERRED EMBODIMENTS

Hereinafter, an example of an embodiment of binoculars 10 according to the present disclosed technology will be described with reference to the accompanying drawings.

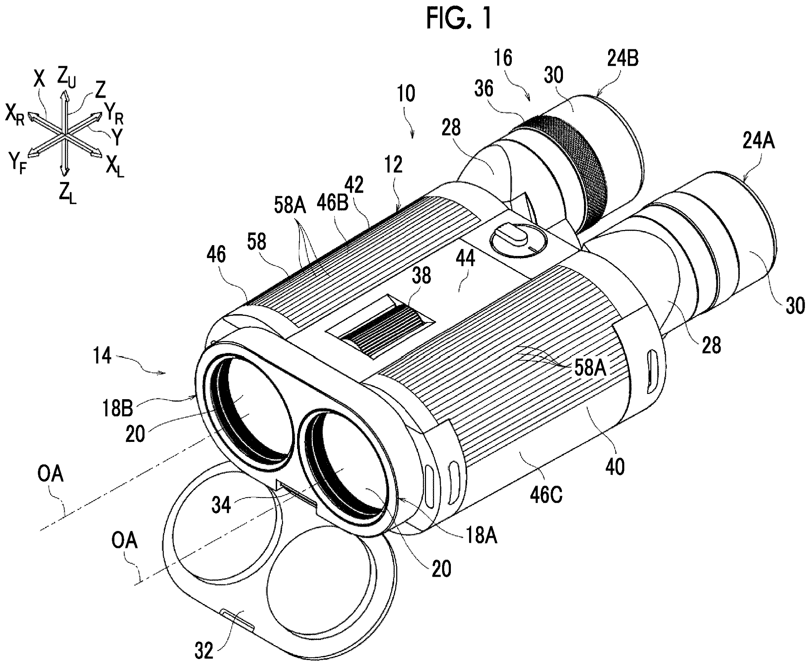

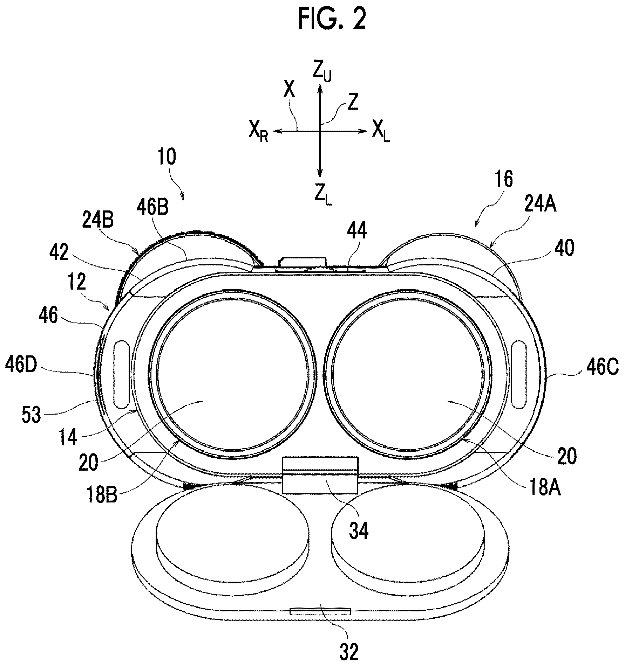

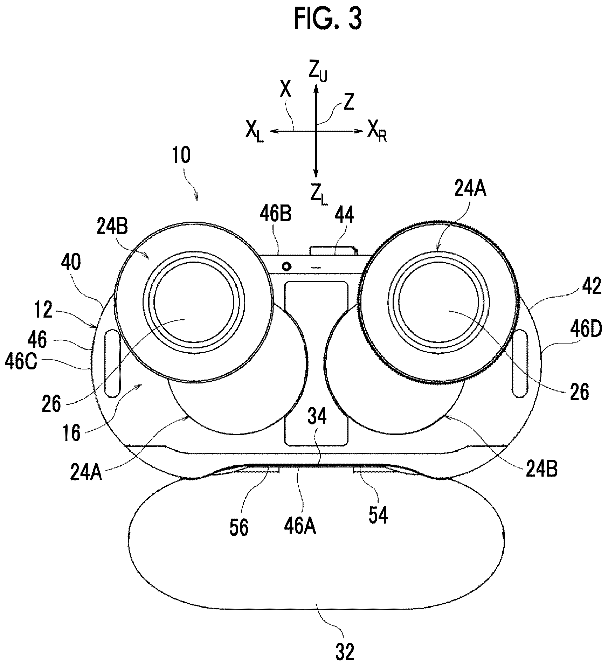

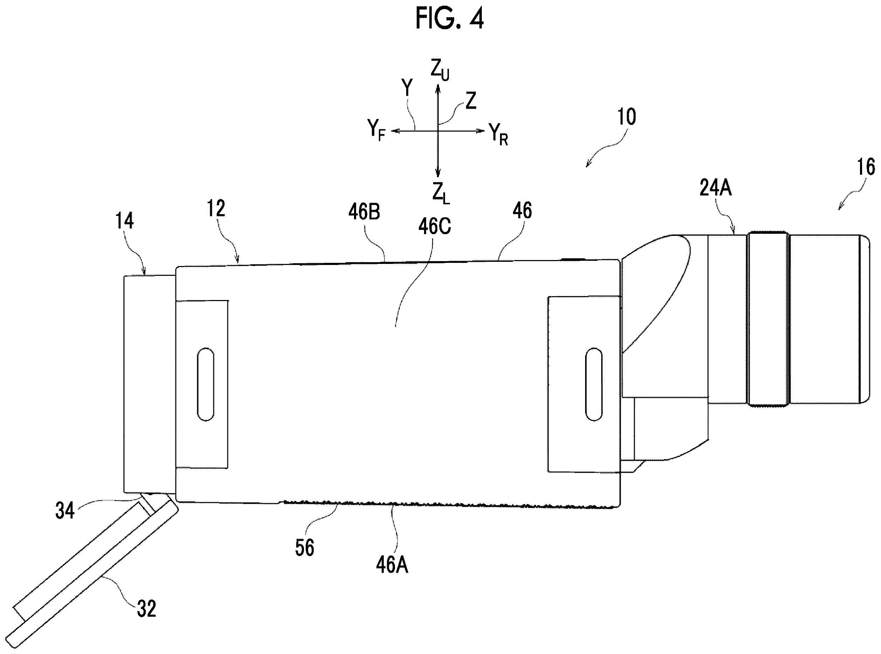

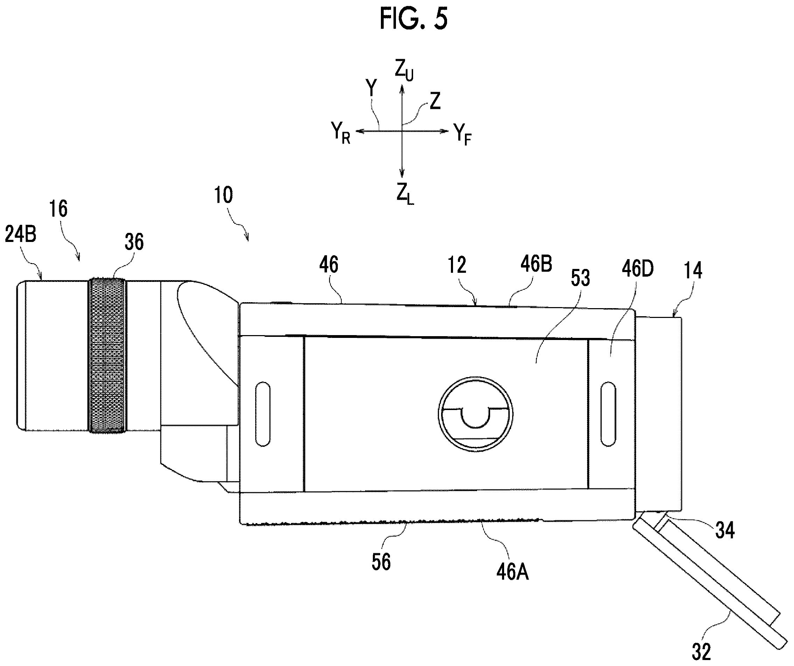

For example, as shown in FIGS. 1 to 6, the binoculars 10 according to an embodiment of the present disclosed technology are, for example, optical vibration-proof binoculars having a vibration-proof function. Although optical vibration-proof binoculars are used as an example of the binoculars 10 herein, the optical vibration-proof binoculars are merely an example and the binoculars 10 may be any binoculars having any function.

Regarding the binoculars 10, for example, a lateral direction, a vertical direction, and a front-rear direction are defined. The lateral direction, the vertical direction, and the front-rear direction of the binoculars 10 are directions orthogonal to each other. An X direction is the lateral direction of the binoculars 10, a Y direction is the front-rear direction of the binoculars 10, and a Z direction is the vertical direction of the binoculars 10. An X_{L} side is a left side of the binoculars 10, and an X_{R} side is a right side of the binoculars 10. A Y_{F} side is a front side of the binoculars 10, and a Y_{R} side is a rear side of the binoculars 10. A Z_{U} side is an upper side of the binoculars 10, and a Z_{L} side is a lower side of the binoculars 10. The binoculars 10 have a pair of optical axes OA. The front-rear direction of the binoculars 10 is a direction extending along a direction along each of the optical axes OA of the binoculars 10.

The binoculars 10 include a body portion 12, an objective optical unit 14, and an ocular optical unit 16. The objective optical unit 14 is provided at a front end portion of the body portion 12, and the ocular optical unit 16 is provided at a rear end portion of the body portion 12. The body portion 12 is a portion of the binoculars 10 that is positioned between the objective optical unit 14 and the ocular optical unit 16, and the body portion 12 constitutes a body part of the binoculars 10.

The objective optical unit 14 is an optical device including an objective lens unit 18A and an objective lens unit 18B. The objective lens unit 18A and the objective lens unit 18B are arranged in the X direction. The objective lens unit 18A is positioned on the left side of the objective optical unit 14, and the objective lens unit 18B is positioned on the right side of the objective optical unit 14. Hereinafter, in a case where the objective lens unit 18A and the objective lens unit 18B are not to be distinguished from each other, each of the objective lens unit 18A and the objective lens unit 18B will be referred to as an objective lens unit 18. Each objective lens unit 18 includes an objective lens 20.

The ocular optical unit 16 is an optical device including an ocular lens unit 24A and an ocular lens unit 24B. The ocular lens unit 24A and the ocular lens unit 24B are arranged in the X direction. The ocular lens unit 24A is positioned on the left side of the ocular optical unit 16, and the ocular lens unit 24B is positioned on the right side of the ocular optical unit 16. Hereinafter, in a case where the ocular lens unit 24A and the ocular lens unit 24B are not to be distinguished from each other, each of the ocular lens unit 24A and the ocular lens unit 24B will be referred to as an ocular lens unit 24. Each ocular lens unit 24 includes an ocular lens 26, a lens barrel 28, and a protective member 30. The ocular lens 26 is provided in the lens barrel 28 and is supported by the lens barrel 28. Each lens barrel 28 is connected to the body portion 12. Each protective member 30 is, for example, a rubber ring and is fixed to a rear end portion of the lens barrel 28. The ocular optical unit 16 is supported by the body portion 12 since each lens barrel 28 is connected to the body portion 12.

The objective optical unit 14 is provided with a front cover 32. The front cover 32 has a size and shape sufficient to cover the objective lens unit 18A and the objective lens unit 18B from ahead of the objective optical unit 14. A lower end portion of the front cover 32 is provided with a hinge 34. The front cover 32 is supported by the hinge 34 so as to be rotationally movable with respect to the objective optical unit 14, and is displaced to a first position where the front cover 32 covers the objective optical unit 14 and to a second position for exposure of the objective optical unit 14. Note that the lens barrel 28 of the ocular lens unit 24B is provided with a diopter adjustment ring 36 for adjustment of the diopter of the binoculars 10. In addition, the body portion 12 is provided with a focus adjustment dial 38 for focus adjustment.

The body portion 12 includes a first lens barrel portion 40, a second lens barrel portion 42, and a connecting portion 44. The first lens barrel portion 40 is positioned on the left side of the body portion 12, and the second lens barrel portion 42 is positioned on the right side of the body portion 12. The connecting portion 44 is positioned between the first lens barrel portion 40 and the second lens barrel portion 42 to connect the first lens barrel portion 40 and the second lens barrel portion 42 to each other.

The body portion 12 includes a housing 46. The housing 46 includes a bottom surface 46A, a top surface 46B, a side surface 46C, and a side surface 46D. The bottom surface 46A is a lower surface of the body portion 12, and the top surface 46B is an upper surface of the body portion 12. The side surface 46C is a left surface of the body portion 12, and the side surface 46D is a right surface of the body portion 12.

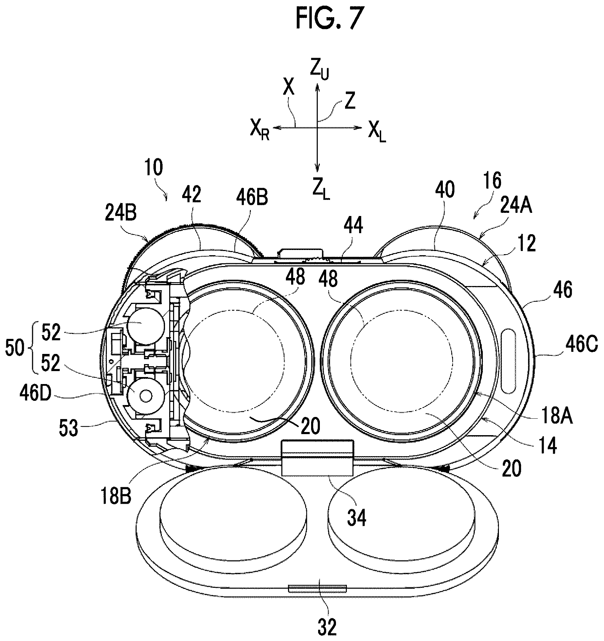

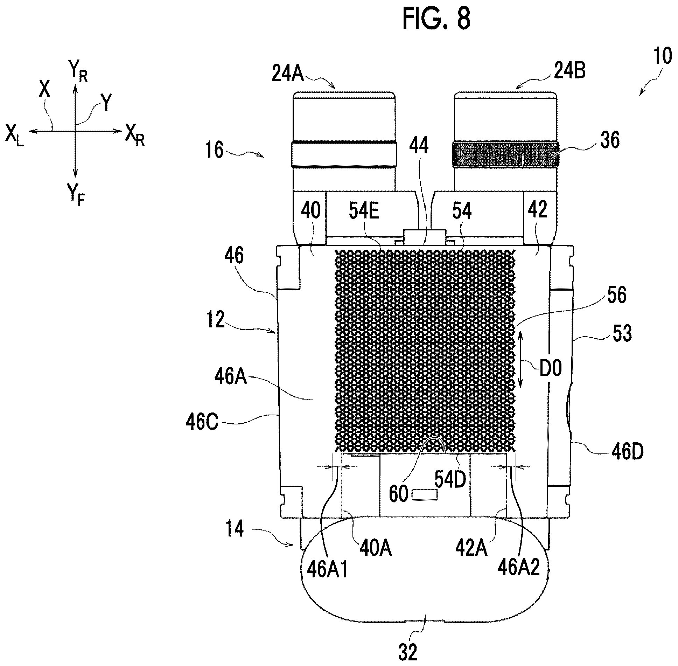

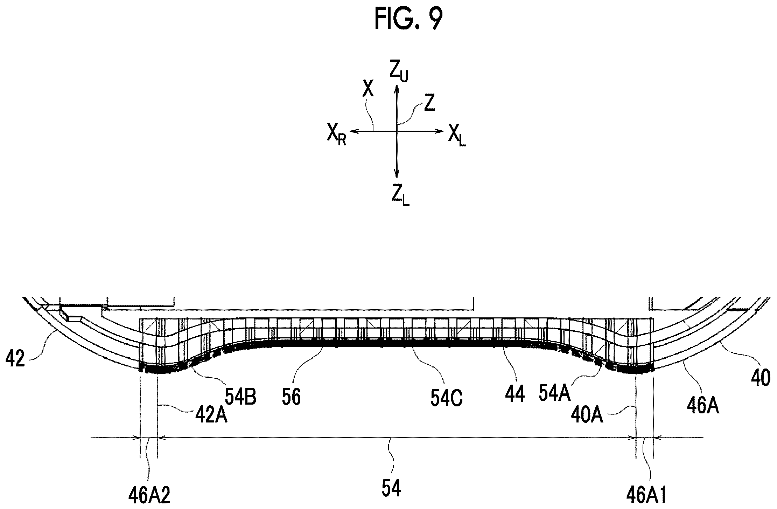

For example, as shown in FIG. 7, the body portion 12 includes a pair of optical systems 48 including a vibration-proof mechanism and a drive power source 50 that drives the vibration-proof mechanism. One of the pair of optical systems 48 is provided in the first lens barrel portion 40, and the other of the pair of optical systems 48 is provided in the second lens barrel portion 42. The drive power source 50 is accommodated in, for example, the second lens barrel portion 42. The drive power source 50 includes, for example, a plurality of batteries 52. The number of the plurality of batteries 52 is, for example, two. The plurality of batteries 52 are arranged in the vertical direction of the body portion 12. The drive power source 50 is disposed on the side surface 46D side with respect to the pair of optical systems 48. In addition, the drive power source 50 is disposed on the side surface 46D side with respect to a recess portion 54 (refer to FIGS. 8 to 10) which will be described later. The side surface 46D is provided with a battery cover 53 that covers the plurality of batteries 52.

For example, as shown in FIGS. 8 to 10, the recess portion 54 is formed at the bottom surface 46A. The recess portion 54 is formed in a shape recessed toward the top surface 46B side. The recess portion 54 is formed in a quadrangular shape as seen from below the body portion 12. The recess portion 54 includes a first side surface 54A of the bottom surface 46A that is formed at the first lens barrel portion 40, a second side surface 54B of the bottom surface 46A that is formed at the second lens barrel portion 42, and a connecting surface 54C of the bottom surface 46A that is formed at the connecting portion 44. Each of the first side surface 54A and the second side surface 54B is a curved surface, and the connecting surface 54C is a flat surface.

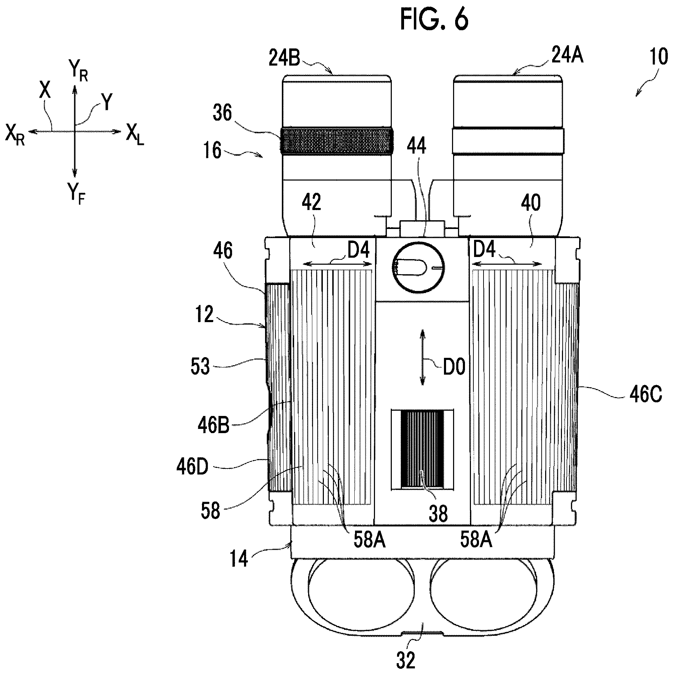

A first surface shape portion 56 having a three-dimensional shape is formed at a surface of the recess portion 54. Meanwhile, a second surface shape portion 58 (for example, refer to FIG. 6) having a three-dimensional shape is formed at a surface of the top surface 46B. The three-dimensional shape of the first surface shape portion 56 is different from the three-dimensional shape of the second surface shape portion 58. Hereinafter, details will be described.

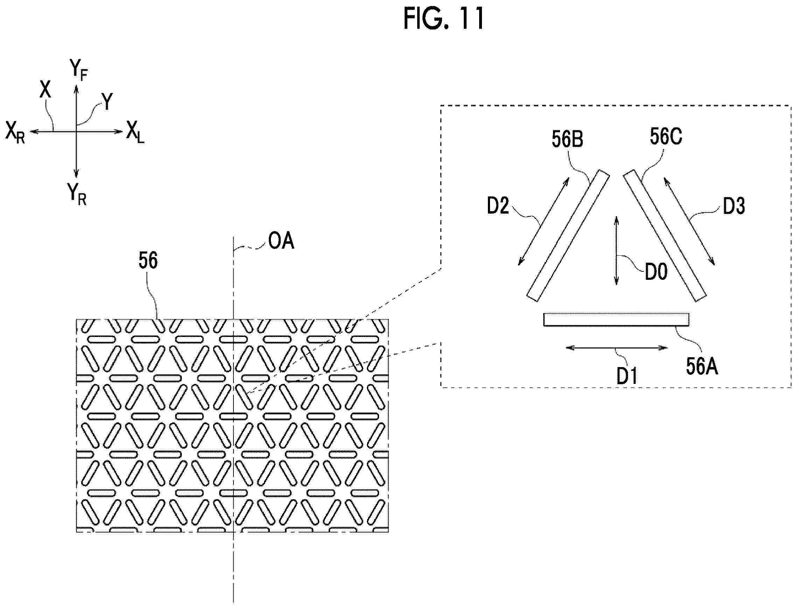

For example, as shown in FIG. 11, the first surface shape portion 56 has a pattern shape in which distinctive patterns (hereinafter, referred to as "first patterns") are repeatedly arranged. Each first pattern includes a first shape portion 56A, a second shape portion 56B, and a third shape portion 56C. The first shape portion 56A extends in a first direction D1 intersecting the direction (hereinafter, referred to as an "optical axis direction D0") along the optical axes OA of the binoculars 10. The first direction D1 is, for example, a direction orthogonal to the optical axis direction D0. The second shape portion 56B extends in a second direction D2 that is inclined with respect to the optical axis direction D0 and the first direction D1. The third shape portion 56C extends in a third direction D3 that is inclined with respect to the optical axis direction D0, the first direction D1, and the second direction D2. The angle of inclination of the second direction D2 with respect to the first direction D1 and the angle of inclination of the third direction D3 with respect to the first direction D1 are equal to each other. The angles of inclination are acute angles. Each of the cross-sectional shapes of the first shape portion 56A, the second shape portion 56B, and the third shape portion 56C may be a rectangular shape, a semicircular shape, or a triangular shape.

The first surface shape portion 56 has a pattern shape in which the first patterns are repeatedly arranged in the first direction D1, the second direction D2, and the third direction D3. Note that the first surface shape portion 56 may be regarded as having a pattern shape in which the first patterns are repeatedly arranged in the first direction D1 and the second direction D2, may be regarded as having a pattern shape in which the first patterns are repeatedly arranged in the first direction D1 and the third direction D3, and may be regarded as having a pattern shape in which the first patterns are repeatedly arranged in the second direction D2 and the third direction D3.

The first shape portion 56A, the second shape portion 56B, and the third shape portion 56C are separated from each other. Accordingly, a gap is provided between the first shape portion 56A and the second shape portion 56B, a gap is provided between the second shape portion 56B and the third shape portion 56C, and a gap is provided between the first shape portion 56A and the third shape portion 56C. The first shape portion 56A linearly extends along the first direction D1, the second shape portion 56B linearly extends along the second direction D2, and the third shape portion 56C linearly extends along the third direction D3. The first shape portion 56A, the second shape portion 56B, and the third shape portion 56C form a triangular shape since the first shape portion 56A, the second shape portion 56B, and the third shape portion 56C linearly extend along the first direction D1, the second direction D2, and the third direction D3, respectively. The triangular shape is, for example, an equilateral triangular shape. The first surface shape portion 56 has a shape that generates a grip force in a case where a gripping force is applied in the optical axis direction D0 and in a case where a gripping force is applied in a direction intersecting the optical axis direction D0 since the first surface shape portion 56 includes the first shape portions 56A, the second shape portions 56B, and the third shape portions 56C.

For example, as shown in FIG. 6, the second surface shape portion 58 has a pattern shape in which a plurality of projecting portions 58A extending in the optical axis direction D0 are arranged in a fourth direction D4 intersecting the optical axis direction D0. The fourth direction D4 is, for example, a direction orthogonal to the optical axis direction D0. Each of the projecting portions 58A linearly extends along the optical axis direction D0. The cross-sectional shape of each of the projecting portions 58A may be a rectangular shape, a semicircular shape, or a triangular shape. The second surface shape portion 58 has a shape that generates a grip force in a case where a gripping force is applied in a direction intersecting the optical axis direction D0 since the second surface shape portion 58 includes the plurality of projecting portions 58A. As described above, the three-dimensional shape of the first surface shape portion 56 is different from the three-dimensional shape of the second surface shape portion 58. Hereinafter, the first surface shape portion 56 will be described in more detail.

For example, as shown in FIGS. 8 to 10, the first surface shape portion 56 is formed not only at the surface of the recess portion 54 but also in a region 46A1 and a region 46A2 of the bottom surface 46A that are adjacent to both sides of the recess portion 54. For example, the region 46A1 and the region 46A2 include regions that are adjacent to both sides of the recess portion 54 in the lateral direction of the body portion 12. In addition, the region 46A1 includes a region of an apex portion 40A of the first lens barrel portion 40 that is on the bottom surface 46A side, and the region 46A2 includes a region of an apex portion 42A of the second lens barrel portion 42 that is on the bottom surface 46A side. For example, the region 46A1 is a region including the apex portion 40A and extending from the apex portion 40A to the side surface 46C side, and the region 46A2 is a region including the apex portion 42A and extending from the apex portion 42A to the side surface 46D side. Note that since the region 46A1 is a region closer to the recess portion 54 side than the side surface 46C of the body portion 12 is and the region 46A2 is a region closer to the recess portion 54 side than the side surface 46D of the body portion 12 is, the first surface shape portion 56 is not formed at the side surface 46C and the side surface 46D.

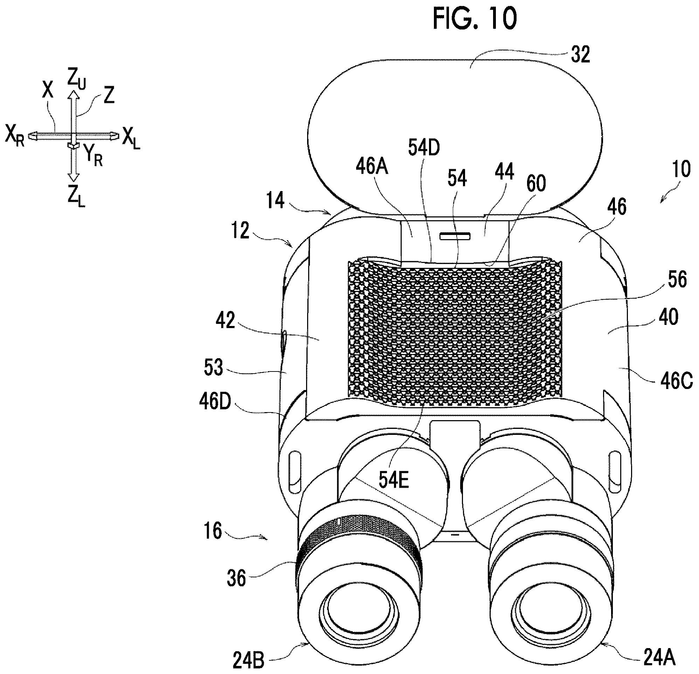

A wall surface 60 (refer to FIGS. 8 and 10) is formed at a first end portion 54D of the recess portion 54 in the optical axis direction. The first end portion 54D is an object-side end portion of the recess portion 54 (that is, a front end portion of the recess portion 54). The wall surface 60 is erected with respect to the surface of the recess portion 54 and extends in the lateral direction and the vertical direction of the body portion 12. The wall surface 60 is positioned between a central portion of the body portion 12 in the optical axis direction D0 and an object-side end portion of the body portion 12. A second end portion 54E of the recess portion 54 in the optical axis direction does not include a wall surface and is open in the optical axis direction D0. The second end portion 54E is an end portion of the recess portion 54 that is on a side opposite to an object side (that is, a rear end portion of the recess portion 54).

As described above, the binoculars 10 according to the present embodiment include the body portion 12 that includes the bottom surface 46A and the top surface 46B, the recess portion 54 recessed to the top surface 46B side is formed at the bottom surface 46A, and the first surface shape portion 56 that is formed in a three-dimensional shape at the recess portion 54 is different from the second surface shape portion 58 that is formed in a three-dimensional shape at the top surface 46B. Accordingly, for example, a strong grip force can be generated in comparison with a case where a surface shape portion similar to the second surface shape portion 58 is formed at the recess portion 54, and thus the grip performance of the body portion 12 can be improved.

Specifically, the first surface shape portion 56 has a pattern shape in which the first patterns are repeatedly arranged, and each first pattern includes the first shape portion 56A that extends in the first direction D1 intersecting the optical axis direction D0 and the second shape portion 56B that extends in the second direction D2 inclined with respect to the optical axis direction D0 and the first direction D1. Accordingly, in a case where a gripping force is applied in the optical axis direction D0, a grip force can be generated in the optical axis direction D0 since a finger (for example, a thumb) of a user is caught on the first shape portion 56A. In addition, in a case where a gripping force is applied in a direction intersecting the optical axis direction D0, a grip force can be generated in the direction intersecting the optical axis direction D0 since a finger of the user is caught on the second shape portion 56B.

In addition, the first surface shape portion 56 has a pattern shape in which the first patterns are repeatedly arranged in the first direction D1 and the second direction D2. Accordingly, a grip force can be generated in the optical axis direction D0 and a direction intersecting the optical axis direction D0 over an area where the first surface shape portion 56 is formed.

In addition, the first shape portion 56A and the second shape portion 56B are separated from each other. Accordingly, the number of edge portions of the first shape portion 56A and the second shape portion 56B is increased in comparison with a case where the first shape portion 56A and the second shape portion 56B are connected to each other, and thus a stronger grip force can be generated.

In addition, each first pattern includes the third shape portion 56C that extends in the third direction D3 inclined with respect to the optical axis direction D0 and the first direction D1. Accordingly, in a case where a gripping force is applied in a direction intersecting the optical axis direction D0, a stronger grip force can be generated in the direction intersecting the optical axis direction D0 since a finger of the user is caught on the third shape portion 56C as well.

In addition, the first surface shape portion 56 has a pattern shape in which the first patterns are repeatedly arranged in the first direction D1, the second direction D2, and the third direction D3. Accordingly, a stronger grip force can be generated in the optical axis direction D0 and a direction intersecting the optical axis direction D0 over an area where the first surface shape portion 56 is formed in comparison with a case where the first surface shape portion 56 has only a pattern shape in which the first patterns are repeatedly arranged in the first direction D1 and the second direction D2.

In addition, the first shape portion 56A, the second shape portion 56B, and the third shape portion 56C are separated from each other. Accordingly, the number of edge portions of the first shape portion 56A, the second shape portion 56B, and the third shape portion 56C is increased in comparison with a case where the first shape portion 56A, the second shape portion 56B, and the third shape portion 56C are connected to each other, and thus a stronger grip force can be generated.

In addition, the first shape portion 56A, the second shape portion 56B, and the third shape portion 56C form a triangular shape. Accordingly, the designability of the bottom surface 46A including the first surface shape portion 56 can be improved in comparison with a case where the first surface shape portion 56 has a pattern shape in which the first shape portions 56A, the second shape portions 56B, and the third shape portions 56C are not regularly arranged.

In addition, the second surface shape portion 58 has a pattern shape in which the plurality of projecting portions 58A extending in the optical axis direction D0 are arranged in the fourth direction D4 intersecting the optical axis direction D0. Accordingly, in a case where a gripping force is applied in a direction intersecting the optical axis direction D0, a grip force can be generated in the direction intersecting the optical axis direction D0 in comparison with a case where the second surface shape portion 58 is not formed at the top surface 46B since a finger (for example, an index finger, a middle finger, a ring finger, and a little finger) of a user is caught on the projecting portions 58A.

In addition, the first surface shape portion 56 is also formed in the region 46A1 and the region 46A2 of the bottom surface 46A that are adjacent to the recess portion 54. Accordingly, the area of the first surface shape portion 56 is large in comparison with a case where the area of the first surface shape portion 56 falls within the recess portion 54, and thus a grip force can be generated over a wider area.

In addition, the region 46A1 and the region 46A2 include regions that are adjacent to the recess portion 54 in the lateral direction of the body portion 12. Accordingly, an area in which a grip force can be generated can be expanded in the lateral direction of the body portion 12.

In addition, the body portion 12 includes the first lens barrel portion 40 and the second lens barrel portion 42 that are arranged in the lateral direction of the body portion 12, the region 46A1 includes a region of the apex portion 40A of the first lens barrel portion 40 that is on the bottom surface 46A side, and the region 46A2 includes a region of the apex portion 42A of the second lens barrel portion 42 that is on the bottom surface 46A side. Accordingly, a stronger grip force can be generated in comparison with a case where the first surface shape portion 56 is not formed in the region 46A1 and the region 46A2 since a pad of a finger (for example, a thumb) of a user is caught on the first surface shape portion 56 at at least any one of the apex portion 40A of the first lens barrel portion 40 that is on the bottom surface 46A side or the apex portion 42A of the second lens barrel portion 42 that is on the bottom surface 46A side.

In addition, the region 46A1 is a region closer to the recess portion 54 side than the side surface 46C of the body portion 12 is and the region 46A2 is a region closer to the recess portion 54 side than the side surface 46D of the body portion 12 is. Accordingly, since the first surface shape portion 56 is not formed at the side surface 46C and the side surface 46D of the body portion 12, the designability of the side surface 46C and the side surface 46D of the body portion 12 can be improved in comparison with, for example, a case where the first surface shape portion 56 is formed at the side surface 46C and the side surface 46D of the body portion 12.

In addition, the wall surface 60 is formed at the first end portion 54D of the recess portion 54 in the optical axis direction D0. Accordingly, a finger of a user can be made less likely to be caught at a position beyond the first end portion 54D in comparison with a case where the wall surface 60 is not formed at the first end portion 54D.

In addition, the first end portion 54D is an object-side end portion of the recess portion 54. Accordingly, a finger of a user can be restrained from coming into contact with the objective optical unit 14 in comparison with a case where the wall surface 60 is not formed at the first end portion 54D.

In addition, the wall surface 60 is positioned between the central portion of the body portion 12 in the optical axis direction D0 and an object-side end portion of the body portion 12 (that is, a front end portion of the body portion 12). Accordingly, for example, in comparison with a case where the wall surface 60 is positioned between the central portion of the body portion 12 in the optical axis direction D0 and an end portion of the body portion 12 that is on a side opposite to the object side (that is, the rear end portion of the body portion 12), the area of the recess portion 54 and the area of the first surface shape portion 56 can be increased and thus the degree of freedom of the position of a finger of a user can be increased.

In addition, the second end portion 54E of the recess portion 54 in the optical axis direction D0 is open in the optical axis direction D0. Accordingly, for example, since a finger of a user can be made less likely to be caught on the second end portion 54E in comparison with a case where the wall surface 60 is formed at the second end portion 54E, the usability of the binoculars 10 can be improved.

In addition, the body portion 12 includes the first lens barrel portion 40 and the second lens barrel portion 42 that are arranged in the lateral direction of the body portion 12, and the connecting portion 44 that connects the first lens barrel portion 40 and the second lens barrel portion 42 to each other, and the recess portion 54 includes the first side surface 54A of the bottom surface 46A that is formed at the first lens barrel portion 40, the second side surface 54B of the bottom surface 46A that is formed at the second lens barrel portion 42, and the connecting surface 54C of the bottom surface 46A that is formed at the connecting portion 44. Accordingly, for example, the area of the recess portion 54 and the area of the first surface shape portion 56 can be increased in comparison with a case where the recess portion 54 is formed only in the area of the connecting surface 54C, and thus a grip force can be generated over a wider area.

In addition, the first side surface 54A and the second side surface 54B are curved surfaces. Accordingly, a finger of a user comes into contact with the first side surface 54A and the second side surface 54B with even pressure in comparison with a case where the first side surface 54A and the second side surface 54B are formed by perpendicular surfaces perpendicular to the connecting surface 54C, and thus a grip force can be exhibited while the touch feeling is made favorable. In addition, the connecting surface 54C is a flat surface. Accordingly, for example, it is possible to suppress a decrease in size of a space inside the body portion 12 in comparison with a case where the connecting surface 54C is a recess surface that is recessed toward the top surface 46B side.

In addition, the body portion 12 includes the optical systems 48 including the vibration-proof mechanism and the drive power source 50 that drives the vibration-proof mechanism, and the drive power source 50 is disposed on the side surface 46D side of the body portion 12 with respect to the optical systems 48. Accordingly, it is possible to avoid interference between the drive power source 50 and the optical systems 48.

In addition, the drive power source 50 is disposed on the side surface 46D side with respect to the recess portion 54. Accordingly, it is possible to increase the area of the recess portion 54 and the area of the first surface shape portion 56 while avoiding interference between the drive power source 50 and the recess portion 54 and thus a grip force can be generated over a wider area.

In addition, the first surface shape portion 56 has a shape that generates a grip force in a case where a gripping force is applied in the optical axis direction D0 and the second surface shape portion 58 has a shape that generates a grip force in a case where a gripping force is applied in a direction intersecting the optical axis direction D0. Accordingly, since a grip force can be generated even in a case where a gripping force is applied in the optical axis direction D0 in comparison with, for example, a case where both the first surface shape portion 56 and the second surface shape portion 58 have shapes that generate a grip force in a case where a gripping force is applied in a direction intersecting the optical axis direction D0, the usability of the binoculars 10 can be improved.

Note that in the above-described embodiment, each of the first patterns of the first surface shape portion 56 includes the first shape portion 56A, the second shape portion 56B, and the third shape portion 56C. However, each first pattern may include only the first shape portion 56A and the second shape portion 56B or may include only the first shape portion 56A and the third shape portion 56C.

In addition, in the above-described embodiment, the first shape portion 56A, the second shape portion 56B, and the third shape portion 56C are separated from each other. However, the first shape portion 56A, the second shape portion 56B, and the third shape portion 56C may be connected to each other.

In addition, in the above-described embodiment, the first surface shape portion 56 is also formed in the region 46A1 and the region 46A2 of the bottom surface 46A that are adjacent to the recess portion 54, the region 46A1 includes a region of the apex portion 40A of the first lens barrel portion 40 that is on the bottom surface 46A side, and the region 46A2 includes a region of the apex portion 42A of the second lens barrel portion 42 that is on the bottom surface 46A side. However, the first surface shape portion 56 may be formed in only one of the region 46A1 or the region 46A2.

A plurality of the above-described modification examples may be combined with each other as appropriate.

Contents described and shown above are for detailed description of a part according to the present disclosed technology and are merely an example of the present disclosed technology. For example, description of the above-described configurations, functions, actions, and effects is description related to an example of configurations, functions, actions, and effects of parts related to the present disclosed technology. Therefore, it is a matter of course that an unnecessary part of the contents described and illustrated above may be deleted, a new element may be added, and replacement may be made without departing from the spirit of the present disclosed technology. In addition, in order to avoid complication and facilitate the understanding of a portion according to the present disclosed technology, regarding the contents described and illustrated above, description related to common technical knowledge or the like which does not need to be described to enable implementation of the present disclosed technology has been omitted.

Explanation of References

## Claims

1. Binoculars comprising:
a body portion that includes a bottom surface and a top surface,
wherein a recess portion recessed to a top surface side is formed at the bottom surface, and
a first surface shape portion that is formed in a three-dimensional shape at the recess portion is different from a second surface shape portion that is formed in a three-dimensional shape at the top surface.

2. The binoculars according to claim 1,
wherein the first surface shape portion has a pattern shape in which first patterns are repeatedly arranged, and
each first pattern includes
a first shape portion that extends in a first direction intersecting an optical axis direction, and
a second shape portion that extends in a second direction inclined with respect to the optical axis direction and the first direction.

3. The binoculars according to claim 2,
wherein the first surface shape portion has a pattern shape in which the first patterns are repeatedly arranged in the first direction and the second direction.

4. The binoculars according to claim 2 or 3,
wherein the first shape portion and the second shape portion are separated from each other.

5. The binoculars according to any one of claims 2 to 4,
wherein each first pattern includes a third shape portion that extends in a third direction inclined with respect to the optical axis direction and the first direction.

6. The binoculars according to claim 5,
wherein the first surface shape portion has a pattern shape in which the first patterns are repeatedly arranged in the first direction, the second direction, and the third direction.

7. The binoculars according to claim 5 or 6,
wherein the first shape portion, the second shape portion, and the third shape portion are separated from each other.

8. The binoculars according to any one of claims 5 to 7,
wherein the first shape portion, the second shape portion, and the third shape portion form a triangular shape.

9. The binoculars according to any one of claims 1 to 9,
wherein the second surface shape portion has a pattern shape in which a plurality of projecting portions extending in an optical axis direction are arranged in a fourth direction intersecting the optical axis direction.

10. The binoculars according to any one of claims 1 to 9,
wherein the first surface shape portion is also formed in a region of the bottom surface that is adjacent to the recess portion.

11. The binoculars according to claim 10,
wherein the region includes a region that is adjacent to the recess portion in a lateral direction of the body portion.

12. The binoculars according to claim 10 or 11,
wherein the body portion includes a first lens barrel portion and a second lens barrel portion that are arranged in a lateral direction of the body portion, and
the region includes a region of an apex portion of at least one of the first lens barrel portion or the second lens barrel portion, the apex portion being on a bottom surface side.

13. The binoculars according to any one of claims 10 to 12,
wherein the region is a region closer to a recess portion side than a side surface of the body portion is.

14. The binoculars according to any one of claims 1 to 13,
wherein a wall surface is formed at a first end portion of the recess portion in an optical axis direction.

15. The binoculars according to claim 14,
wherein the first end portion is an object-side end portion of the recess portion.

16. The binoculars according to claim 14 or 15,
wherein the wall surface is positioned between a central portion of the body portion in the optical axis direction and an object-side end portion of the body portion.

17. The binoculars according to any one of claims 14 to 16,
wherein a second end portion of the recess portion in the optical axis direction is open in the optical axis direction.

18. The binoculars according to any one of claims 1 to 17,
wherein the body portion includes
a first lens barrel portion and a second lens barrel portion that are arranged in a lateral direction of the body portion, and
a connecting portion that connects the first lens barrel portion and the second lens barrel portion to each other, and
the recess portion includes
a first side surface of the bottom surface that is formed at the first lens barrel portion,
a second side surface of the bottom surface that is formed at the second lens barrel portion, and
a connecting surface of the bottom surface that is formed at the connecting portion.

19. The binoculars according to claim 18,
wherein the first side surface and the second side surface are curved surfaces, and the connecting surface is a flat surface.

20. The binoculars according to any one of claims 1 to 19,
wherein the body portion includes
an optical system including a vibration-proof mechanism, and
a drive power source that drives the vibration-proof mechanism, and
the drive power source is disposed on a side surface side of the body portion with respect to the optical system.

21. The binoculars according to claim 20,
wherein the drive power source is disposed on the side surface side with respect to the recess portion.

22. The binoculars according to any one of claims 1 to 21,
wherein the first surface shape portion has a shape that generates a grip force in a case where a gripping force is applied in an optical axis direction, and
the second surface shape portion has a shape that generates a grip force in a case where a gripping force is applied in a direction intersecting the optical axis direction.
